(19) Europäisches Patentamt / European Patent Office / Office européen des brevets

(11) **EP 3 006 891 B1**

(12) **EUROPEAN PATENT SPECIFICATION**

(45) Date of publication and mention
of the grant of the patent:
**03.04.2019 Bulletin 2019/14**

(51) Int Cl.:
**G01B 11/02** *(2006.01)*     **G01B 11/06** *(2006.01)*
**G01S 17/48** *(2006.01)*     **B60G 17/019** *(2006.01)*
**B60G 11/27** *(2006.01)*

(21) Application number: **15189100.9**

(22) Date of filing: **09.10.2015**

(54) **AIR SPRING WITH A DISTANCE MEASUREMENT ARRANGEMENT USING INFRARED**

LUFTFEDER MIT EINER INFRAROT-ABSTANDSMESSUNGSANORDNUNG

RESSORT PNEUMATIQUE AVEC UN DISPOSITIF DE MESURE DE DISTANCE PAR INFRAROUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2014 EP 14188490**

(43) Date of publication of application:
**13.04.2016 Bulletin 2016/15**

(73) Proprietor: **Torque and More (TAM) GmbH
82319 Starnberg (DE)**

(72) Inventor: **MAY, Lutz
82335 Berg (DE)**

(74) Representative: **LKGLOBAL
Lorenz & Kopf PartG mbB Patentanwälte
Brienner Straße 11
80333 München (DE)**

(56) References cited:
**EP-A2- 0 419 082    JP-A- H0 979 842
JP-A- S5 618 710    JP-A- 2014 048 139
US-A- 3 937 574    US-A- 5 229 829
US-A- 5 337 137    US-A1- 2009 052 288**

• **Jochen Mattay: "Lichtstreuung", RÖMPP, August
2010 (2010-08), pages 1-4, XP055238316,
Retrieved from the Internet:
URL:https://roempp.thieme.de/roempp4.0/do/
data/RD-12-01090 [retrieved on 2015-12-23]**

EP 3 006 891 B1

**Description**

Field of the invention

The invention relates to an air spring for a vehicle with a distance measurement arrangement.

Technical Background

Air springs are used in vehicles as mechanical damping elements. There may be the need to measure the working stroke of an air spring (i.e., the height of an air spring or the distance between two opposing ends, e.g. top plate and bottom plate, of the air spring) in order to monitor the behaviour of the air spring and/or the behaviour of the vehicle. For such monitoring tasks, distance measurement arrangements or the like are used. In the following and in the context of measuring the working stroke of an air spring, the terms height sensor, height measurement arrangement, distance measurement arrangement, sensor system or the like are used as synonyms for a device which is configured to measure the working stroke of an air spring.

The demand on air springs with fully integrated and reliable functioning height sensor systems is increasing. The term "air spring fully integrated height sensor" means that all of the required components needed to build the function of a height sensor are inside of the air spring or integrated within the air spring (typically within an interior room of the air spring), and thus well protected from the environment (water, dust, snow, dirt, ...). While potentially a complete wireless height sensor solution is technically possible (example: sensor electronics powered by battery, sensor output signal transmitted by radio-like signals), it is also possible to design and provide wire-bound sensor system solutions.

A number of different height sensor solutions (to be integrated into air springs) have been developed and introduced in the past, for example based on magnetic principle measurement, where the distance from one sensor component to another sensor component is determined based on the strength of a magnetic field.

EP 0 419 082 A2 describes an optical gauging apparatus utilizing light projected toward an object to be gauged and reflected on the object to gauge a distance to the object or an amount of change occurring in the object.

JP S56 18710 describes a distance measuring arrangement. The output of an oscillator is applied to an LED so that the LED emits infrared rays within a solid angle with prescribed directivity. A detector has a beamlike light reception field to receive light reflected within a short distance. Another detector has a beamlike light reception field to receive light reflected within a long distance. The detectors generate outputs corresponding to the quantities of light received by them.

US 5,229,829 describes an air spring for a vehicle comprising a height sensor that comprises a pair of light-emitting elements disposed at positions spaced at different distances from a reflection plate provided on an opposite plate of said air spring, the elements alternately emitting light rays, and a light-receiving element for receiving a light ray generated from each light-emitting element and reflected by the reflection plate.

Summary

It may be seen as an object of the invention to provide an air spring with a distance measurement arrangement that is less sensitive to environmental influences, with low manufacturing costs and low mounting and assembly effort.

This object is achieved by the subject matter of the independent claims. Further embodiments are described in the dependent claims and in the following description.

According to the invention, an air spring as defined in the appended claims is provided. The air spring comprises a distance measurement arrangement that comprises a transmitting unit and a receiving unit. The transmitting unit is configured for emitting infrared, IR, light towards a reference device and the receiving unit is configured for receiving IR light reflected from the reference device. The receiving unit is particularly configured for receiving a first IR signal and a second IR signal, wherein the distance measurement arrangement is configured for determining a distance (S) between the distance measurement arrangement and the reference device based on the first and second IR signal.

The distance measurement arrangement can be mounted to either of the top plate or the bottom plate of an air spring. For example, the transmitting unit and the receiving unit may be arranged within one housing or may be part of one and the same installation component. The reference device is mounted to the other one of the top and bottom plate. An IR signal is emitted towards the reference device which reflects the IR signal towards the receiving device, thus enabling distance measurement based on the intensity (amplitude) of the received IR signal. Given that the amplitude of the emitted IR signal is known and the amplitude reduction or attenuation as a function of the distance between the receiver and the transmitter is also known, the distance between the reference device and the distance measurement unit can be determined (this is about half of the distance between the transmitter and receiver, depending on the lateral distance between the transmitter and the receiver, as the IR signal must cover the distance from the transmitter to the reference device and back to the receiver).

The reference device may particularly be a flat surface which reflects infrared radiation. The reference device may be part of one of the bottom or top plate of the air spring. For example, the surface of one of the bottom or top plate of the surface may be prepared such that it reflects infrared radiation. Alternatively or additionally, a coating may be applied to that surface in order to meet the requirement of reflecting infrared radiation.

Infrared light is electromagnetic radiation (typically thermal radiation emitted by objects) with wavelength between 700 nm and 1 mm. This is typically invisible to humans. The transmitting unit may be an IR-LED (light emitting diode) which is configured to emit an IR-beam towards the reference device. The receiving device may be an IR-receiver, which is particularly configured for determining the amplitude (intensity, light intensity) of a received IR-signal or configured to provide a measurement signal which is based on the amplitude of the received IR-signal.

By determining the distance between the distance measurement arrangement based on the first and second IR signal, a differential mode measurement of the distance is enabled. This means that the distance measurement is independent of the absolute intensity of the used IR transmitter. The light intensity of an IR-LED may change as a result of aging of the IR transmitter. Therefore, the differential mode measurement enables a more reliable distance measurement over the usage time of the distance measurement arrangement in an air spring and high measurement accuracy independent of varying light intensity of the transmitting unit.

The first and the second IR signal received by the receiving unit may result from reflections of an infrared signal which is emitted by the transmitting unit and reflected by the reference device towards the receiving unit.

For example, one IR signal emitted by the transmitting unit may be reflected by the reference device towards the receiving unit and the receiving unit may comprise two IR receivers (which are particularly mounted at separated locations and spaced apart from each other), each of which receives reflections of the emitted IR signal from different reflection points on the surface of the reference device. Thus, as a result of one emitted IR signal which is reflected by the surface of the reference device towards the receiving unit, two reflected IR signals are received by (at least) two IR receivers, wherein these two received IR signals are used for determining the distance to the reference device.

Alternatively, the transmitting unit may comprise two IR LEDs (located at different positions and spaced apart from each other), each of which emits an IR signal towards the reference device. The reference device reflects the IR signals towards the receiving unit, which may comprise a single IR receiver in this variant. The IR receiver receives the IR signals of the two IR LEDs. The distance between the distance measurement arrangement and the reference device is determined similar to the variant described previously.

By mounting two IR receivers spaced apart from each other, the angle of the received IR signals with reference to the reference device differs from each other, therefore, the distance between each one of the IR receivers and the IR transmitter is different and the amplitude of the received signals differs from each other, thus enabling the differential mode measurement.

In other words, the two IR signals may be the result of two IR transmitters (IR-LEDs) which are reflected by the reference device towards one IR receiver or vice versa, namely one IR transmitter emits an IR signal and this signal is reflected towards the receiving device and received by two IR receivers. Either of these approaches enables differential mode measurement based on IR signals.

Using IR signals for distance measurement may be advantageous in particular under harsh environmental conditions or circumstances. IR signals are less sensitive to particles in the air, for example dust, damp, moisture, dirt. Therefore, the distance can be determined reliable as the intensity of the IR signal is not substantially attenuated by such particles in the air between the transmitting unit and the receiving unit.

According to an embodiment of the invention, the distance measurement arrangement further comprises a control unit which is configured for determining the distance (S) by calculating a ratio of the first and second IR signal. Thus, determination of the distance is independent of the absolute values of the amplitude of the IR signal but depends on the ratio of the two IR signals only. Reduction of the light intensity of the IR transmitter may not have any influence on the measurement result.

According to the invention of claim 1, the transmitting unit comprises a first IR transmitting element which is adapted to emit an IR signal towards the reference device, the receiving unit comprises a first IR receiving element and a second IR receiving element, wherein the first IR receiving element is arranged for receiving the first IR signal and the second IR receiving element is arranged for receiving the second IR signal, and wherein the first and second IR signals are reflections of the emitted IR signal from the reference device towards the receiving unit.

This embodiment relates to the scenario described above where the receiving unit comprises two IR receivers spaced apart from each other and each one of the IR receivers receives an IR signal reflected from the reference device, thus representing the first and the second IR signals.

According to a further embodiment of the invention, the first IR receiving element and the second IR receiving element are spaced apart from each other.

Thus, the distance between the IR transmitter and the first and second IR receiving element, respectively, is different and enables differential mode measurement.

According to invention of claim 1, the first IR transmitting element, the first IR receiving element, and the second IR receiving element are arranged in line with each other along a common linear axis.

In this embodiment, the first and second IR receiving elements are laterally spaced apart along the common linear axis from the IR transmitting element.

In one embodiment, the IR receiving elements are both spaced apart from the IR transmitting element in the same direction. The IR transmitting element may in this embodiment be inclined such that the emitted IR signal is directed towards the IR receiving elements. Depending on an opening angle of the IR beam of the IR transmitting element it may be inclined such that the reflected IR beam reaches both IR receiving elements.

According to a non-claimed comparative example, a first connection line from the first IR transmitting element to the first IR receiving element and a second connection line from the first IR transmitting element to the second IR receiving element form an angle which is greater than 0°.

In this case, the IR transmitting element and the IR receiving elements are not arranged in a line and their location can be adapted to varying needs and requirements, for example if there is not enough space to provide these elements spaced apart along a linear axis. According to a further embodiment of the invention, the first IR transmitting element is inclined at an angle greater than 0° with respect to a perpendicular on the reference device such that the first IR transmitting element is configured to emit an IR signal towards the reference device at said angle.

In other words, the IR transmitting element is inclined such that the IR beam is directed at a point on the surface of the reference device which is not directly opposite to the location of the IR transmitting device, but having a lateral offset such that the reflection of the IR beam is directed to the IR receiving element(s).

According to a further embodiment of the invention, the first IR transmitting element is inclined towards the receiving unit.

According to a further embodiment of the invention, the first IR receiving element is inclined at an angle greater than 0° with respect to a perpendicular on the reference device, wherein the first IR receiving element is inclined towards the transmitting unit.

In other words, both the IR transmitting element and (at least one of) the IR receiving element(s) are inclined towards each other. Thus, the recognition of the IR signal and the determination of the reflected IR signals can be efficiently done and the distance measurement can be carried out reliably even if the absolute value of the light intensity of the IR transmitting unit decreases significantly.

It should be noted that the description herein similarly applies to embodiments which comprise more than two IR receiving elements. For example, the distance measurement arrangement may comprise three or more IR receiving elements which are located spaced apart from each other at predetermined locations, wherein the distance between the IR transmitting element and the IR receiving elements (i.e. the working stroke of the air spring) can be determined based on the shape of the signal strengths received by the multitude of IR receiving elements.

According to the invention of claim 7, the transmitting unit comprises a first IR transmitting element which is adapted to emit the first IR signal and a second IR transmitting element which is adapted to emit the second IR signal towards the reference device, wherein the receiving unit comprises a first IR receiving element, wherein the first IR receiving element is arranged for receiving the first IR signal and the second IR signal, which are reflected from the reference device towards the receiving unit.

This embodiment describes the inversion of some of the embodiments described above. While describing at least two IR receiving elements and one IR transmitting element above, this embodiment relates to multiple IR transmitting elements, each of which emits its own IR signal such that a distance measurement based on different IR signals can be carried out.

It should be understood that this embodiment may comprise more than two IR transmitting elements, wherein the IR transmitting elements are configured to emit IR signals which can be distinguished from each other (for example by using slightly different wavelengths or using pulse modulation, or the IR transmitting elements may be controlled such that at one time only one of these elements emits IR light while the IR receiving element is synchronized with this cycle) while the IR receiving element is configured to receive the IR signals and determine the distance to the reference device based on the multiple IR signals.

Basically, the embodiment having multiple IR transmitting elements corresponds to the embodiments having multiple IR receiving elements. Both variants enable determination of multiple (different) distances based on IR radiation while these multiple measurement values are used for differential mode measurement in order to determine the distance between the distance measurement arrangement and the reference device.

According to a further embodiment of the invention, the transmitting unit comprises a first IR transmitting element which is adapted to emit the first IR signal and a second IR transmitting element which is adapted to emit the second IR signal towards the reference device, wherein the receiving unit comprises a first IR receiving element and a second IR receiving element, wherein the first IR receiving element is arranged for receiving at least one of the first IR signal and the second IR signal and wherein the second IR receiving element is arranged for receiving at least one of the first IR signal and the second IR signal, which are reflected from the reference device towards the receiving unit.

This embodiment combines the multiple IR transmitting elements with multiple IR receiving elements and therefore enables redundancy for the distance measurement.

According to the invention, an air spring is provided comprising a first plate and a second plate, wherein the second plate is arranged opposite to the first plate. The air spring further comprises a distance measurement arrangement as described above and hereinafter, wherein the distance measurement arrangement is arranged at the first plate.

According to the invention, the air spring comprises a reference device, wherein the reference device is arranged at the second plate opposite to the distance measurement arrangement such that IR light emitted by the transmitting unit is reflected towards the receiving unit.

According to a further embodiment of the invention, the reference device comprises a surface pointing towards the distance measurement arrangement, wherein the surface is a flat surface having reflective and diffusing properties for IR light.

According to a further embodiment of the invention, the first plate and the second plate are inclined at an angle greater than 0° with respect to each other.

Thus, the reference device may be inclined relating to the IR transmitting and IR receiving elements such that the IR signals are reflected from the IR transmitter towards the IR receiver.

In other words, the distance measurement arrangement and the air spring may be described as follows:

Some of the targeted air spring-integrated key-specifications for current requirements may be:

- Only one cable connection (for electric power supply and sensor signal output) at only one end of the air-spring (either at the top side or the bottom side of the air spring);
- Reliable operation for an extended period of time (5 to 10 years), wherein the requirement to operate for 5 years or longer may prevent (or may make it difficult) the use of a battery
- The height measurement range >=350 mm (for an standard truck air spring)
- The distance measurement arrangement may have to be fully integrated inside the air-spring (protected from harsh environment). The form factor and appearance (other than the connection cable) of the air spring may not change when adding a distance measurement arrangement as described herein.
- One aspect or requirement may be low manufacturing costs and low mounting and assembly effort.
- The distance measurement arrangement may be suitable for applications where the air spring will expand (move from a contracted/compressed state to an expanded/extracted state) and contract (the opposite movement) following a linear path or alternatively following a curved kinematic path (the top-plate and the bottom plate of the air spring assembly will not remain parallel to each other during normal operation).

In comparison to light which is visible to humans, infrared (IR) light has the advantage that it is less influenced by dust particles or by changes in the surface structure of the target object (also here called: reference device). When using visible light, the light intensity amplitude of the reflected light beam (when shining a light beam onto an object, like the target object or the reference device) may be strongly influenced by the surface structure (or sauce condition) of the target object (or reference device) and by the potential presence of dust, dirt, oil vapour, or water dew.

However, another consideration challenge may be the fact that most of the affordable IR signal sources and IR receiving devices may age over time. Meaning that the intensity of the emitted IR beam will become less over time, and so the received IR-signal (signal gain will be reduced over time through component aging). Therefore, the here proposed IR-principle-based sensor-solution is not based on measuring the absolute received IR signal amplitude. The here proposed sensor solution is based on triangulation and on signal pattern analysis by comparing the amplitudes of more than one receiver (or alternatively: more than one IR transmitter source) with each other. By doing so, the absolute signal amplitude drops out of the computation.

To keep the cost down of the here proposed height sensor solution (material cost and assembly cost), the entire sensor system will be placed in one location inside an air-spring (in comparison to having electronic circuits at both ends at the air-spring), mounted on a printed circuit board (PCB), for example. The PCB offers the possibility to place the entire sensor electronics also on the same PCB (inside the air-spring). That means there will be no passive or active electronic components used at the opposite end of the air-spring. At the opposite end of the air-spring the reference device will be placed (flat surface that has reflective and diffusing properties for the infrared (IR) signals).

To eliminate the risk of unwanted side effects caused by component aging, the here described sensor solution is a differential type sensor (taking at least two different measurements in order to eliminate the unwanted effects caused by changes of the absolute signal amplitude).

Basically, there can be described at least two different main sensor system design options: Using one signal transmitting (Tx) device and using two or more signal receiving (Rx) devices (here referred to as Rx1 and Rx2, for example). This may be the most preferred design solution as it may cope best with component aging. Alternatively, two or more transmitting devices (Tx1 and Tx2) may be used in combination with one receiving device only (Rx). Alternatively, a combination of these basic design principles may also be used in one embodiment by using multiple transmitting and multiple receiving devices.

The system benefits of the distance measurement arrangement as described herein may be:

- Insensitive to any aging process of the IR transmitting devices (can be up to 50% amplitude drop over the first 12 months of use, for example).
- Typically, only the IR transmitter is aging. The aging process of the IR receivers is much smaller and may be ignored for practical purposes.
- The distance measurement arrangement may be insensitive to daylight, air pressure changes, humidity, dust, oil vapor, mechanical shocks and vibrations.
- The distance measurement arrangement can be implemented requirement few space and being very small sized and therefore easy to fit in most air-spring designs.
- Applying differential mode measurement may accept large assembly tolerances and thus provide cost benefits.
- The distance measurement arrangement may cope well with air spring typical kinematic issues (bottom plate may tilt at different distances).
- For determining the distance by using the distance measurement arrangement, a control unit may be provided which may be of very low circuit complexity. Almost all required peripheral devices (other than the IR transmitters and IR receivers) can be found in standard MPU (Micro Processor Units), and Embedded Controllers. Thus, the control unit may particularly be small in space and have low material / low manufacturing costs.
- The entire sensor system can be placed in one location inside the air spring. It does particularly not require active electronics at two locations (upper and lower mounting plate of the air spring).
- The distance measurement arrangement can be used in air springs that have a shock-absorber placed inside.
- The IR signal beam does not get affected by the ferromagnetic steal that is used to build a shock absorber. Other, magnetic principle based height sensor systems may have great difficulties to achieve the targeted (required) measurement range in air springs with integrated shock absorbers.

Differential mode measurement is typically insensitive to component aging and supply fluctuations while infrared technology is less sensitive (almost insensitive) to dust and dirt. The distance measurement is based on triangulation or signal reflection, not on signal amplitude (absolute value of light intensity). Using a light diffusing surface (at the receiving device, RD) provides freedom of tilting for the RD and reduces the sensitivity to dust and dirt that may cover the surface of the RD. Tilting the IR transmitter and/or the IR Receiver devices allows to improve (increase) the distance measurement range and also allows to manipulate the distance dependent differential signal profiles (sensor system optimization and signal linearization)

While the sensor system according to the invention works with IR signals, in non-claimed comparative examples, visible light and ultraviolet light basically can be used as well, though some operation parameters may be affected disadvantageously, for example resistance to dust and dirt.

Brief description of the drawings

In the following, exemplary embodiments of the inventions are described with reference to the drawings, of which

Fig. 1     shows an air spring;

Fig. 2     shows an air spring;

Fig. 3     shows an air spring according to an exemplary embodiment of the invention;

Fig. 4     shows a distance measurement arrangement according to an exemplary embodiment of the invention;

Fig 5     shows the IR transmitting and receiving elements of a distance measurement arrangement according to an exemplary embodiment of the invention;

Fig. 6     shows the IR transmitting and receiving elements of a distance measurement arrangement according to an exemplary embodiment of the invention;

Fig. 7     shows IR transmitting elements of a distance measurement arrangement according to an exemplary embodiment of the invention;

Fig. 8     shows a distance measurement arrangement according to an exemplary embodiment of the invention;

Fig. 9    shows a distance measurement arrangement according to an exemplary embodiment of the invention;

Fig. 10    shows a distance measurement arrangement according to an exemplary embodiment of the invention;

Fig. 11    shows a distance measurement arrangement according to an exemplary embodiment of the invention;

Fig. 12    shows a distance measurement arrangement according to an exemplary embodiment of the invention;

Fig. 13    shows a table indicating exemplary values of a distance measurement arrangement according to an exemplary embodiment of the invention;

Fig. 14    shows exemplary measurement values of receiving elements of a distance measurement arrangement according to an exemplary embodiment of the invention;

Fig. 15    shows a differential measurement approach of a distance measurement arrangement according to an exemplary embodiment of the invention;

Fig. 16    shows a block diagram of an electronic circuit of a distance measurement arrangement according to an exemplary embodiment of the invention;

Fig. 17    shows a block diagram of an electronic circuit of a distance measurement arrangement according to an exemplary embodiment of the invention;

Fig. 18    shows a distance measurement arrangement according to an exemplary embodiment of the invention;

Fig. 19    shows a distance measurement arrangement according to an exemplary embodiment of the invention;

Fig. 20    shows a distance measurement arrangement according to an exemplary embodiment of the invention;

Fig. 21    shows a distance measurement arrangement according to an exemplary embodiment of the invention;

Fig. 22    shows the signal processing of the signals received at the receiving unit of a distance measurement arrangement according to an exemplary embodiment of the invention;

Fig. 23    shows a block diagram of an electronic circuit of a distance measurement arrangement according to an exemplary embodiment of the invention;

Detailed description of embodiments

The drawings are schematic and not to scale.

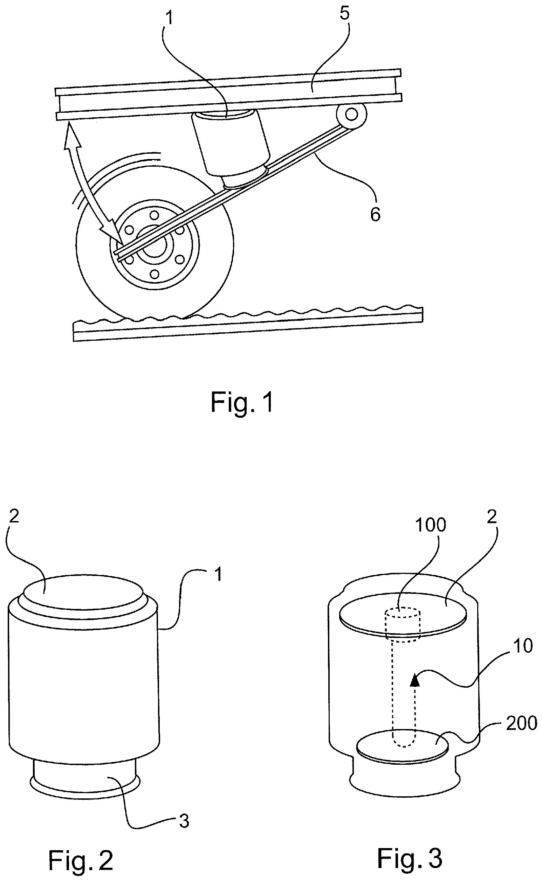

Fig. 1 shows an air spring 1 mounted to a vehicle, namely to a lever 6 which is rotatably attached at the vehicle chassis 5. The lever 6 can rotate clockwise or counter clockwise, as indicated by the double-tipped arrow.

In this example, the top-plate and bottom-plate of the air-spring are not always moving in parallel to each other, i.e. the inclination angle of the bottom plate relative to the top plate changes while the lever is moving in one of the possible directions.

One of the largest challenges (in relation to an air spring integrated height sensor) is the potential influences onto the sensor system performances, caused by the harsh operating conditions and the ever changing environmental conditions, like: extended automotive operating temperature range: -50 deg C to +100 deg C; in average up to 30 bar of air pressure; sudden and relatively larger air pressure changes; strong mechanical vibrations for the entire operational time; potentially the presence of dust; and potentially the presence of humidity.

Trying to measure the height changes of an air spring through light-intensity may be more difficult than anticipated. Light transmitting and light receiving components seem to age relatively quickly under the above listed operating conditions. As a consequence of this, complex (and costly) calibration and age-compensation methods have been invented to tackle this challenge.

On the other hand, ultrasonic principle based sensor systems had their challenges in dealing with the changes of the sound-speed in air, as the air-pressure keeps changing and as the density of air can also change by the influence of air-humidity changes. In addition to this, the ultrasonic measurement principle may not deal with the possible tilting of the reference device (beam deflection).

Another sensing technology that seems to provide satisfying performances and seems to be less sensitive to changing environmental conditions is based on magnetic principles. Some of the magnetic principle based height sensor solutions may be relatively complex (as they need active and / or passive electronics functions at both ends of the air spring, for example).

Figs. 2 and 3 show an air spring 1 with a bottom plate 3 and a top plate 2. A distance measurement arrangement 100 is arranged in an interior room of the air spring, i.e. within the air spring, and mounted to the top plate 2 (alternatively, it can be mounted to the bottom plate 3). On the other plate, a reference device 200 is mounted. The distance measurement arrangement 100 emits IR signals 10 which are reflected by the reference device 100 and directed back towards the distance measurement arrangement, namely towards the receiving unit (not explicitly shown in Figs. 2 and 3).

Inside the air spring unit 1, the IR-principle based sensor system will be mounted at one end of the air-spring (in this case at the top plate, facing downwards). The IR signal will then be reflected by the reference device (RD) 200, for example by a diffusing surface of the bottom plate. Almost any type of surface structure of the RD is allowed. This sensor principle will detect and measure the spacing or distance between the sensor system 100 (front face) to the surface of the reference device 200.

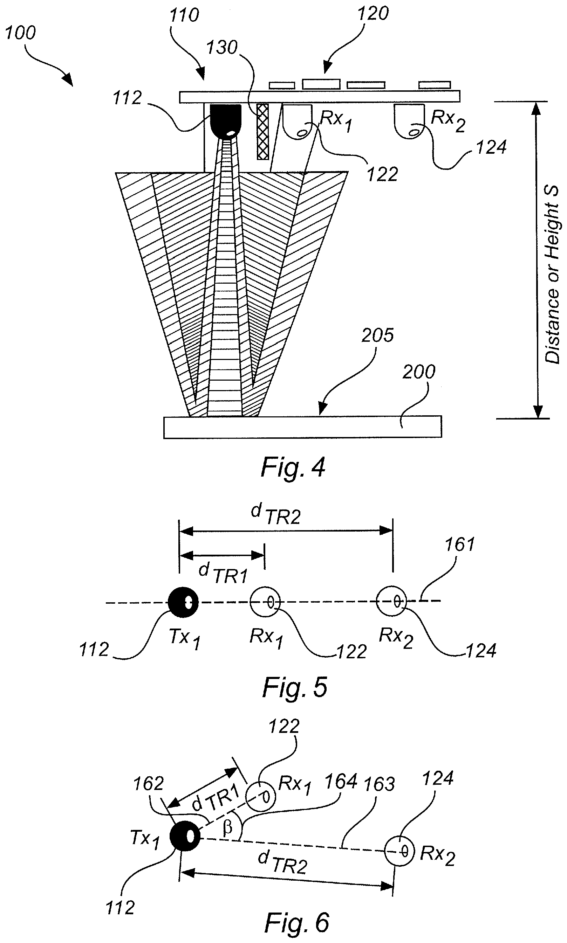

Fig. 4 shows a distance measurement arrangement 100 with a IR transmitter 112 (part of the IR transmitting unit 110) and two IR receivers 122, 124 (part of the IR receiving unit 120) which are mounted to a printed circuit board (PCB). The IR beam emitted by the IR transmitted 112 and reflected by the reference device 200 towards the receiving elements 122, 124 is shown and it can be clearly seen that the intensity of the IR signal at the IR receivers 122, 124 differs such that differential mode measurement can be performed.

The IR beam is reflected by the surface 205 of the reference device 200 in order to enable determining the distance S between the distance measurement arrangement 100 and the reference device 200.

The objective is to measure the spacing S (distance or height) between the two items (modules): the reference device 200 and the actual sensor module 100 (also called: Transmitter Receiver TxRx). The individual transmitter and receiver devices are mounted on one carrier, which can be a PCB (Printed Circuit Board).

In this example the Transmitter-Receiver sensor-system is placed from one side on a Printed Circuit Board (PCB). The unused space on the other side of the PCB can be used for the Sensor System Electronics. However, this is optional.

An infrared signal-source (like an IR emitting diode, Tx) is placed on a carrier or PCB and is transmitting a focused beam, straight downwards, towards the reference device. The reference device is placed at some distance away (S) from the Transmitter-Receiver device (TxRx PCB). The reference device is designed in such way that it will reflect the IR beam with certain efficiency. The reflected IR signal is then received by at least two independent operating IR sensors 122, 124 (like IR sensitive transistors), here called Rx1 and Rx2. In this specific example, all three items (the IR transmitter Tx and the two IR receiving devices Rx1 and Rx2) are placed on one axis, as will be explained in more detail with reference to Fig. 5. Consequently the distance the IR signal beam has to travel between Rx1 to Tx (dTR1) is shorter than the distance between Rx2 to Tx (dTR2).

The surface structure of the reference device may not be glossy or polished. In case the surface of the reference device is polished or glossy, then the here described sensor system may be sensitive to the tilting of the reference device (in relation to the TxRx PCB). The objective is that the reference device has an IR signal diffusing surface structure. By doing so (IR signal diffusing surface), one additional benefit is that the sensor system is insensitive to dust, for example (as dust may have a light diffusing property).

Fig. 5 shows the arrangement of the IR transmitter 112 and the two IR receivers 122, 124 along a common axis 161.

In this specific example all three IR devices (one transmitter Tx, and the two receivers Rx1 and Rx2) are placed on one axis 161. The distance dTR1 is shorter than the distance dTR2. For the following statement it is assumed that the IR transmitting device is looking straight down to the reference device and that the plane of the reference device is perfectly parallel to the plane of the TxRx PXB. Thus, the IR transmitting signal ray hits the RD surface perpendicular. As the reference device is reflecting the IR beam diffused, the IR signal received by the Receiver RX1 will be stronger (larger signal amplitude) than the IR signal received by RX2 (lower signal amplitude).

Fig. 6 shows an alternative arrangement of the IR transmitter 112 and the two IR receivers 122, 124. The IR receivers may be arranged such that a connecting line 162, 163 between one of the IR receivers 122, 124, respectively, to the IR transmitter 112 enclose an angle 164.

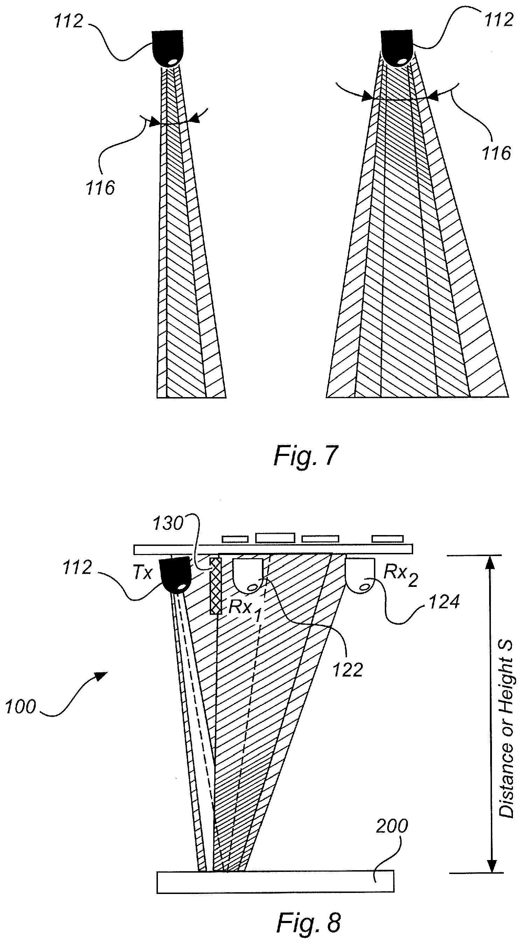

Fig. 7 shows an IR transmitter 112 having different scattering angles 116 of the emitted IR beam.

When designing and building an IR triangulation and signal pattern sensor system, a decision has to be made about the angle 116 with which the IR signal will be emitted by the IR Transmitter. The beam-angle defines how far reaching the IR signal beam will be. A small beam angle (scattering angle 116, see drawing on the left) will create a more focused IR beam. IR signal transmitters are available with a beam (or ray) angle of 5 degree or even less. When building a distance sensor for a relative short measurement range (in relation to standard air-spring devices that may be 250 mm or less) then the IR transmitter beam (or ray) angle can be increased to 10 or 20 degree, for example.

Whatever the angle may be that will be chosen, it may be of relevance that the IR signal distribution is (almost and virtually) uniform across the entire IR-beam cross-section. Otherwise it may be difficult to achieve the targeted measurement repeatability.

In this drawing are shown two IR Transmitter devices, one with a focused beam (small signal beam angle, or small ray-angle, drawing on the left), and one with a larger IR signal beam angle (drawing on the right). Using a more focused IR beam (drawing on the left) may allow using less electric energy and to achieve larger measurement ranges (large S).

Fig. 8 shows a distance measurement arrangement basically as described with reference to the other drawings herein. The IR transmitter 112 is tilted towards the IR receiver 122, 124, thus directing the core of the beam not perpendicularly towards the reference device but at an angle such that the reflected IR signal is more intense when reaching the IR receiver 122, 124.

To increase the efficiency of this sensor principle, the IR transmitting device can be tilted to direct the reflected IR beam more towards the IR receiving devices. The angle chosen with which the IR beam will be directed towards to the IR receiving devices may defines the signal amplitude curve with which the IR signals are received by the two IR receivers (Rx1 and Rx2). It may be advisable to keep this angle (Tx tilting angle) constant at all times as otherwise it may be difficult to calibrate the distance sensor performance.

Alternatively or additionally to tilting the IR transmitter 112, one or all of the IR receivers 122, 124 may also be tilted towards the IR transmitter. Depending on the targeted measurement range (distance S) the IR receiving devices can be tilted towards the IR transmitter. By doing so the signal amplitude received can be optimized (increased) for one specific distance. In case the measurement range has to be very large (large S value, like 500 mm or more) then better measurement results may be achieved when not (or only very little) tilting the IR receivers.

In the description and explanation herein the terms "tilted" and "focused" IR transmitter beams (like 5 degree ray-angle) are used to refer to this structural aspects. For most typical applications, a focused" IR Transmitter device (small ray-angle, see Fig. 7, left hand side) may provide better performing distance sensor solutions.

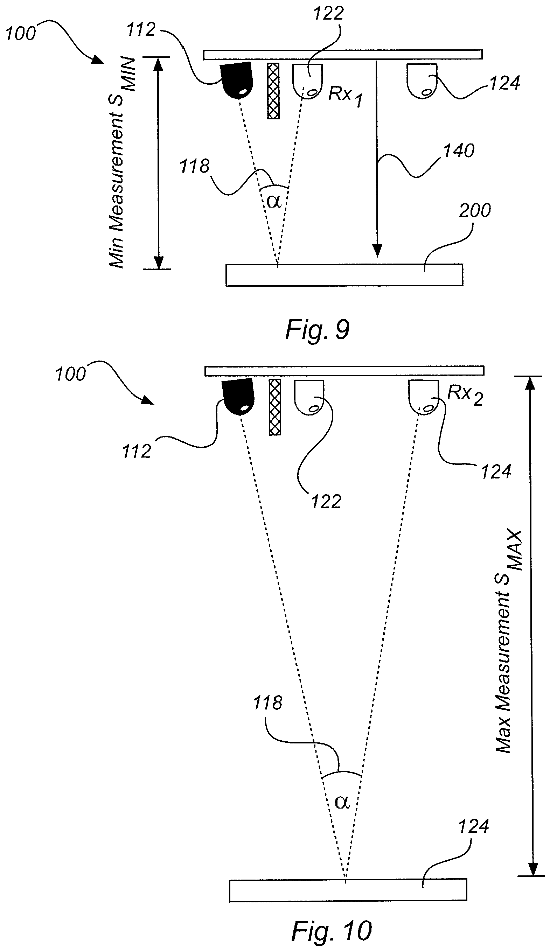

In the example of Fig. 8 a tilted IR transmitter 112is used with a uniform and relatively strong focused IR signal beam (example: signal ray-angle between 5 to 10 deg). This signal beam is then diffusely reflected by the reference device. The chosen IR Transmitter tilting angle is such that at the shortest distance (small "S", here also called SMIN) most of the energy of the reflected IR beam hits the IR Receiver Rx1, and at the largest to-be-measured distance (SMAX), most of the reflected IR beam hits the Receiver Rx2, see illustrations in Figs. 9 and 10.

In the example shown in Fig. 9 the main energy part of the reflected IR beam will hit the IR Receiver Device Rx1 as a result of the tilting angle which results in a reflection angle 118 (angle between the "incoming" and "reflected" signal beams). This constellation happens when the reflecting reference device is at the nearest planned position (here called SMIN).

In the example shown in Fig. 10, the main energy part of the reflected IR beam will hit the IR Receiver Device Rx2 with the same tilting angle than that of Fig. 9. This constellation happens when the beam reflecting reference device is at the furthest planned position (here called SMAX). The angle 118 of the reflected IR beam is the same.

In Fig. 9, the signal amplitude of the received IR signal at Rx1 may be larger than the signal amplitude of the IR receiver Rx2. In Fig. 10 the signal amplitude of the received IR signal at Rx1 may typically be smaller than the signal amplitude of the IR receiver Rx2. However, in absolute terms, the IR signals received by Rx1 and Rx2 in Fig. 9 will be larger than the IR signals received by Rx1 and Rx2 in Fig. 10 (SMAX).

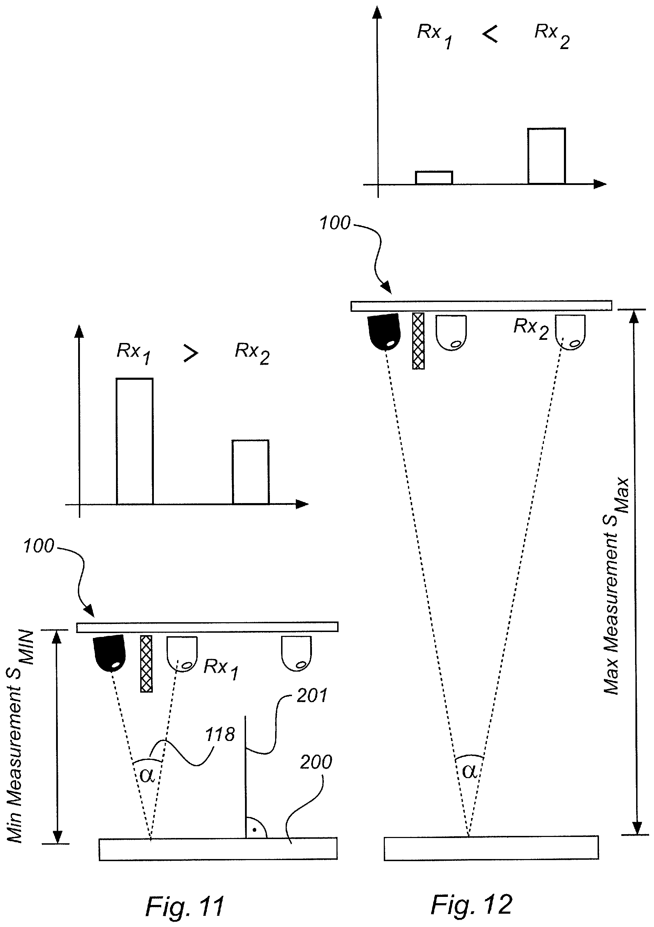

Fig. 11 and 12 further illustrate this functional interrelation.

At the top of Fig. 11 and 12 are shown the absolute measured signal amplitudes for both distance measurement cases for Rx1 and Rx2, respectively at SMIN (Fig. 11) and SMAX (Fig. 12). The absolute signal amplitudes in Fig. 11 (SMIN) are larger than in Fig. 12 (SMAX) as a result of the larger distance in Fig. 12. However, when comparing the signal amplitude Rx1 with Rx2, then the Rx1 signal amplitude is larger in Fig. 11 (SMIN), and in Fig. 12 (SMAX) it is the signal amplitude of Rx2.

It is one aspect of the here described sensing technology that this height (or distance) sensor system is not sensitive to changes of the IR transmitter signal amplitude. Most of the available visible-light, ultraviolet-light, laser-light or infrared-light emitting devices (any type) have the disadvantages that the emitted signal strength can change (age) over time. Without applying a compensation method, the distance (or height) measurement accuracy will change over time.

Two possible compensation methods that can be applied, in order to make the height sensor system insensitive to possible IR transmitter device aging effects (or otherwise caused signal amplitude fluctuations) are described below.

Option 1 (normalizing the measured signals and then using a lookup table or a formula for determining the distance): To simplify the signal processing, the sensor electronics (with its built-in Micro-Processor-Unit, or MPU) is normalizing the signals received from Rx1 and Rx2. Most effective will be to do the signal normalization within the MPU. To do so, a specific signal-gain correction factor may be used (and preferably applied equally to both measurements from Rx1 and from Rx2). The specific signal-gain correction factor has to be such that one of the measurements taken (from Rx1 or Rx2), reaches a targeted value, that will be called here "1" (can be any signal voltage value, like +4.5 Volt, for example). The signal value of the other measurement, (either Rx1 or Rx2) will then be taken as a decoded "address" that will point within a look-up-table to a value that represents the actual distance between TxRx PCB and the RD. This method may be easy to realize with a simple control unit which is configured to carry out these steps and it can be executed very fast.

Option 2 (determining the ratio factor between the signals received Rx1 and Rx2): The sensor electronics built-in Micro-Processor-Unit (or MPU) is configured to calculate the signal amplitude ratio by comparing (dividing) with each other the signal amplitudes Rx1 and Rx2. This will lead to a factor that does no longer bear any relation to the absolute signal amplitude from the IR transmitter Tx.

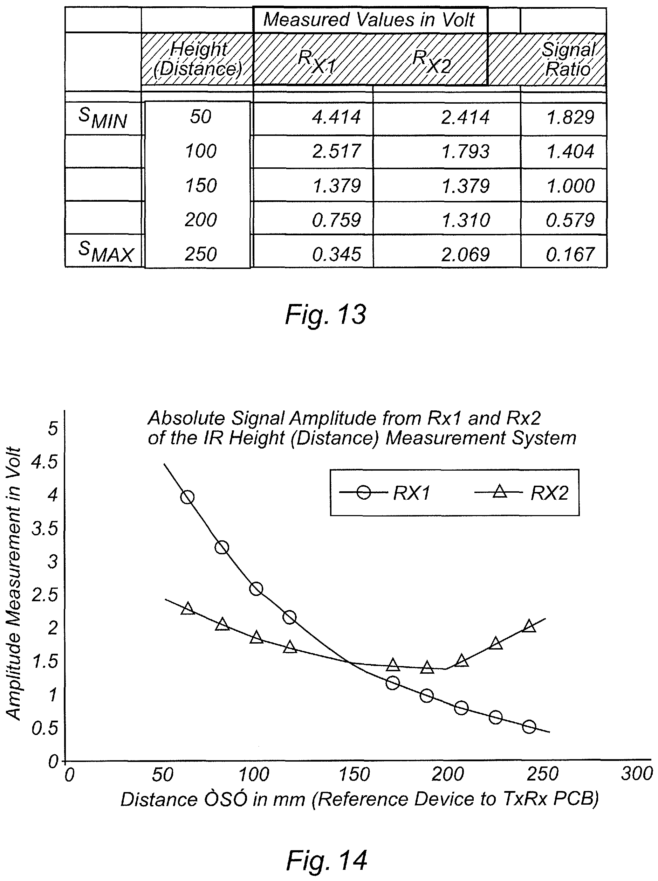

The table shown in Fig. 13 presents exemplary measurement values of the distance measurement arrangement 100.

When the reference device is at the nearest planned distance (called SMIN, first line in the table shown in Fig. 13) then the absolute measured signal values of Rx1 and Rx2 are: 4.414 Volt and 2.414 Volt. The ratio between these two measurements (Rx1 / Rx2) is 1.829. For the largest planned distance of the reference device (SMAX, last line), the ratio between Rx1 and Rx2 is 0.167.

Fig. 14 shows a diagram of the measurement values of Fig. 13. It can be seen that for short distances (left in the diagram) the value of Rx1 is much greater than the value of Rx2 while this relation changes at a height of 150 mm (ratio Rx1/Rx2 = 1).

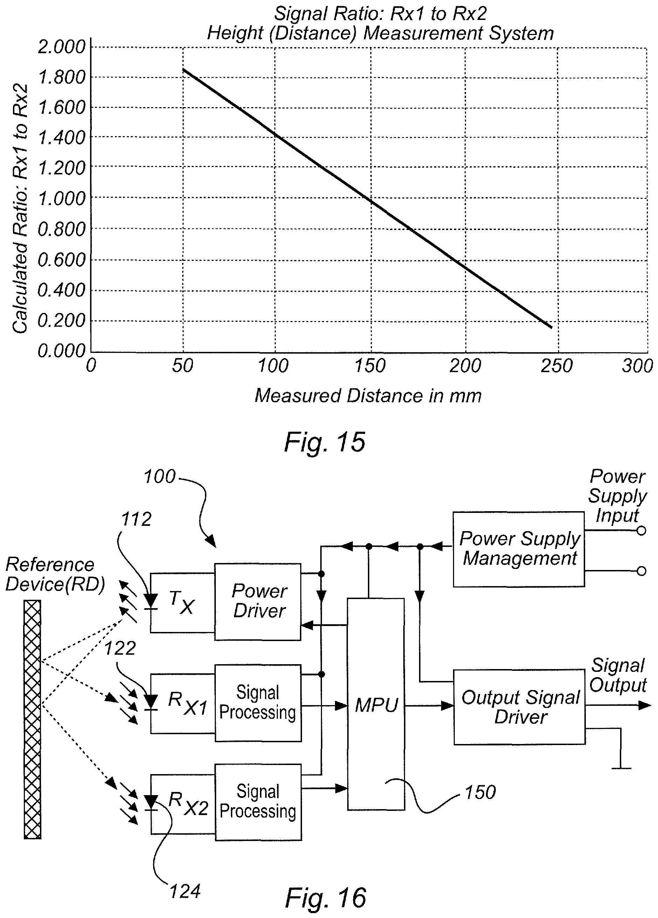

Fig. 15 shows a Rx1 to Rx2 signal ration curve. The Rx1 to Rx2 signal-ratio-curve is nearly a straight line. This signal ratio curve will typically not change in whatever way in case the absolute signal strength of the IR transmitting device Tx will increase or decrease. However, in case the absolute signal strength of the IR transmitter Tx is dropping below a certain value (is very small), then the signal-to-noise ratio of the received signals at Rx1 and Rx2 may become smaller (the noise content in the measured signals may increase, which is not desired as the measurement repeatability may worsen).

For the above example, the trend-line curve is calculated by using the formula:

$$Y = \frac{Rx1}{Rx2} = -0.0083\,X + 2.2402$$

Whereby Y is the calculated ratio "Rx1 / Rx2" and X is the distance in mm between the reference device and the TxRx PCB board (where the IR transmitter and IR receivers are placed). As the desired value is the measured distance in mm (value X), the formula to be used is (for this very specific sensor system design):

$$X = \frac{Y - 2.2402}{-0.0083} = \frac{\frac{Rx1}{Rx2} - 2.2402}{-0.0083}$$

With this equation the measurement ratio (Rx1 / Rx2) can be converted in the distance in Millimeter (mm) between the reference device and the transmitter-receiver board (TxRx PCB). X represents the distance in Millimeter, and Y represents the calculated ratio Rx1 / Rx2.

The equation to be used may be dependent of the used IR transmitter device, the IR receiving devices, the IR diffusing properties of the reference device, the distance measurement range (SMIN to SMAX), and the possible kinematic of the air spring movement. Said equation may be calculated for specific use cases and reused for similar configurations or it can be determined for any air spring during a calibration process.

Fig. 16 shows a circuit of a controlling arrangement of a distance measurement arrangement 100.

The distance measurement arrangement 100 comprises one IR transmitting device (Tx) 112, and two IR Receiving devices (Rx1 and Rx2) 122, 124. A single-chip Micro-Processor-Unit 150 is doing all the computation and can also be responsible for the IR transmitter activation (assuming that the GPIO interface provides sufficient electric power). GPIO stands for: General Purpose Input Output Interface. A power-supply-management circuit is protecting the IR height sensor electronics and is providing regulated voltage to all of the sensor system internal circuits.

Depending on the targeted measurement range, the IR transmitting device TX can be powered (actuated) directly by the MPU (Micro Processor Unit). In case the required electric current consumption exceeds the ability of the MPU digital output driver, then an additional Power Driver circuit may be needed (as shown in Fig. 16).

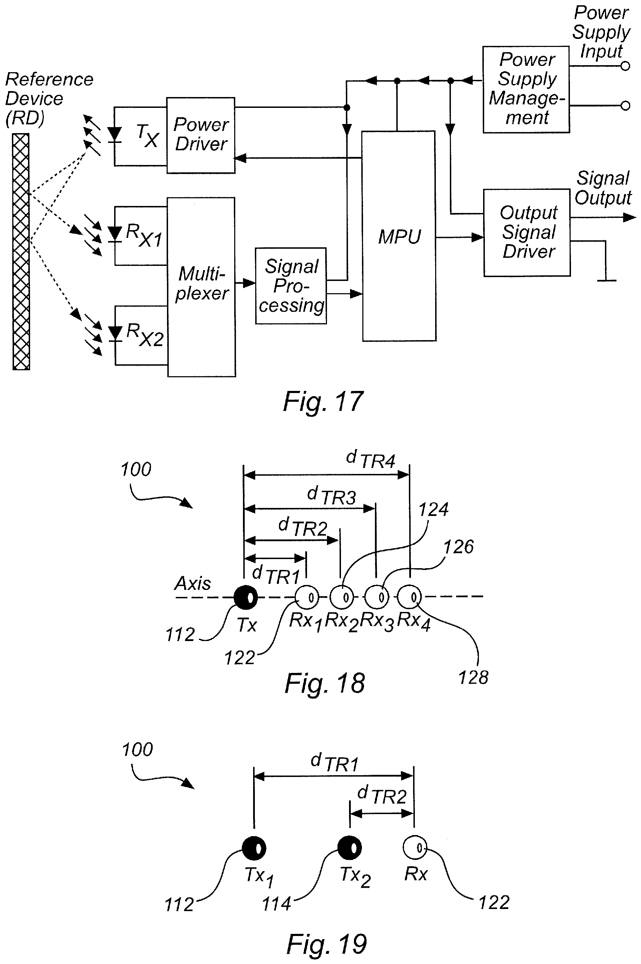

The signals received by the IR receiver devices (Rx1 and Rx2) are filtered and amplified as needed to achieve the targeted sensor system performances. In this example, each IR receiver has its own Signal Processing circuit. Alternatively only one Signal Processing circuit is used and the input of this circuit is multiplexed between the two IR receiving devices, see for example Fig. 17.

Fig. 17 shows using a multiplexer for the two IR signal receiving devices. This can increase the sensor systems long-term stability as one-and-the-same signalprocessing circuit is used for both input channels of the receiving devices. In case that the performance of the signal processing circuit will change (over time through aging, for example), then the resulting and unwanted performance changes (signal gain, filter curves, signal offset) will affect all measurements equally. Through the differential signal processing (within the MPU) the effect of component aging (of the Signal Processing circuit) may be compensated.

Fig. 18 shows an example of the distance measurement arrangement 100 comprising multiple IR receivers 122, 124, 126, 128 (also referred to as an array of IR receivers).

To increase the reliability of the distance sensor system an array of IR receiving devices can be used. This may provide more measurement data and allow calculating a more accurate distance measurement in Millimeter. Fig. 18 shows an example of an array of one IR transmitting device and four IR receiving devices. All of these five components are placed in one axis. Any other configurations can be used as well.

Fig. 19 shows an example with two IR transmitters 112, 114 and a single IR receiver 122.

The previous figures substantially referred to examples using multiple IR receiving devices and only one IR transmitting device. However, the sensor system design can be done the other way around, by using only one IR receiver and two (or more) IR transmitter. A simple way to design such a sensor system is to multiplex the IR signals that are emitted by the two (or more than two) IR transmitters. Thus, only one IR transmitter is active at any time (i.e. emits an IR beam) and that the IR transmitters are activated in sequence, one-after-the-other. As this process is controlled by the on-board MPU, the MPU knows which IR transmitter is active and therefore can label the signal measurement taken by the one-and-only IR receiver. At the end, two or more different measurement results have been taken (caused by different IR transmitters) that will be compared to each other (building a ratio between the different measurements).

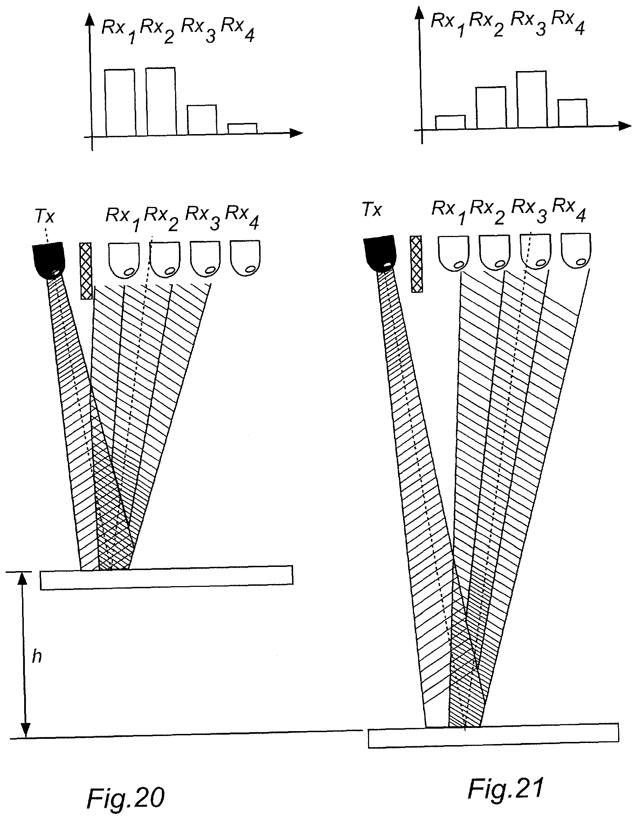

Figs. 20 and 21 show a modification of the example shown in Fig. 18.

This example shows one possible implementation of using an IR (Infra-Red) pattern recognition distance sensor system. One IR Transmitter (Tx), with a semi focused IR beam, is sending-out an IR-beam that will be reflected by a reference device. The reflected IR beam will then be received by an array of IR receivers (here receiver 1 to receiver 4, Rx1 to Rx4).

Depending on how far away (distance h) from the transmitter-receiver array the reference device is placed, the received IR intensity pattern at the four receiver devices will change. For the respective positions of the reference device in Figs. 20 and 21 the IR intensity pattern diagram is show on the very top of the graphics.

An optical separator element (blocking wall) is placed between the IR transmitter and the IR receiver devices and thus reduces or even eliminates any possible IR stray signals from the IR Tx device to the IR Rx devices. Using such an optical separator element may increase substantially the distance measurement range. However, the separator element 130 is an optional element.

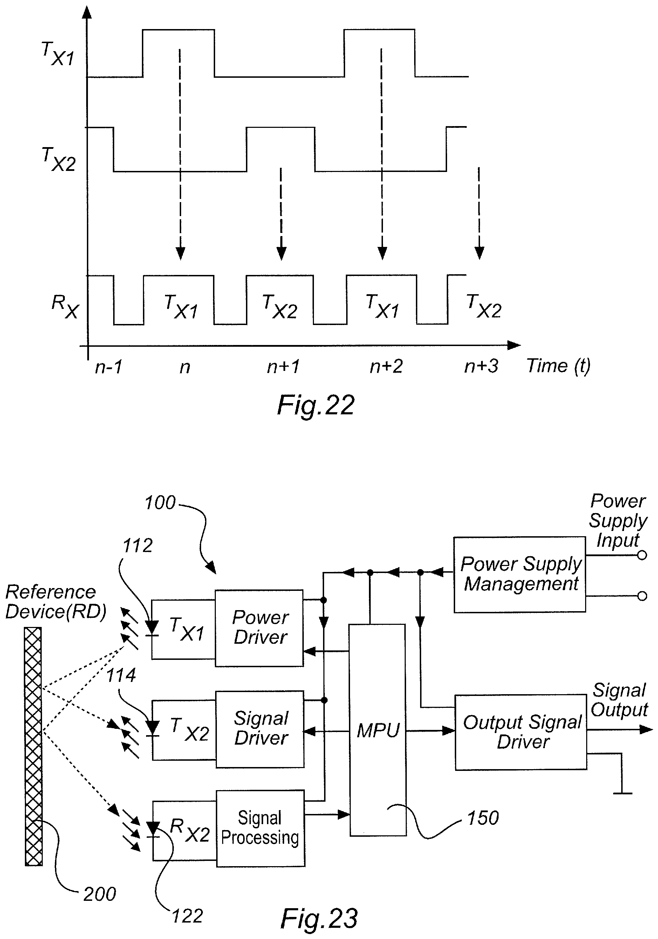

Fig. 22 shows the signals received with the distance measurement arrangement shown in Fig. 19.

The signals received by the IR receiving device Rx are alternating between the information (signals) transmitted by the IR Transmitters Tx1 (at the time n and n + 2, in the example), and Tx2 (at the time n +1 and n + 3, in the example). The single receiver is then providing both measurement results RTX1 and RTX2, one after another. The signal ratio will then be created by RTX1 / RTX2.

The IR signal beam can be a beam of constant signal amplitude or can be pulsed (changing signal amplitude of a constant or varying frequency).

Fig. 23 shows the respective electronics circuit of the distance measurement arrangement shown in Fig. 19. For details relating to the general functioning of this circuit, reference is made to Figs. 16 and 17 and the related description which also applies to Fig. 23 unless stated otherwise, particularly with reference to using two transmitters and one receiver.

Two IR transmitter devices 112, 114 sent out signals in multiplex fashion. Only one IR transmitter (either Tx1 or Tx2) is active at any time. The multiplexed IR signals are received by one IR receiver unit 122. The two received signals (Txl and Tx2) will be processed by the on-board Micro-Processing-Unit 150.

List of reference signs

1        Air spring
2        first plate
3        second plate
5        vehicle chassis
6        lever
10       IR signal

| | |
|---|---|
| 100 | distance measurement arrangement |
| 110 | IR transmitting unit |
| 112 | first IR transmitting element |
| 114 | second IR transmitting element |
| 116 | opening angle of the IR beam |
| 118 | reflection angle of the IR beam |
| 120 | IR receiving unit |
| 122 | first IR receiving element |
| 124 | second IR receiving element |
| 126 | third IR receiving element |
| 128 | fourth IR receiving element |
| 130 | separator element |
| 140 | measuring direction |
| 150 | control unit |
| 161 | common axis |
| 162 | first connection line |
| 163 | second connection line |
| 164 | angle |
| 200 | reference device |
| 201 | perpendicular |
| 205 | surface |

**Claims**

1. Air spring (1) for a vehicle, comprising
   a first plate (2);
   a second plate (3) with a reference device (200), arranged opposite to the first plate (2); and
   a distance measurement arrangement (100) arranged at the first plate (2); wherein the distance measurement arrangement comprises:

   a transmitting unit (110) for emitting infrared, IR, light towards the reference device (200);
   a receiving unit (120) for receiving IR light reflected from the reference device (200);
   wherein the receiving unit (120) is configured for receiving a first IR signal and a second IR signal;
   wherein the distance measurement arrangement (100) is configured for determining a distance (S) between the distance measurement arrangement (100) and the reference device (200) based on the intensity of the first and second IR signals, which are reflected from the reference device (200);
   wherein the reference device (200) is arranged at the second plate (3) opposite to the distance measurement arrangement (100) such that IR light emitted by the transmitting unit (110) is reflected towards the receiving unit (120);
   wherein the transmitting unit (110) comprises a first IR transmitting element (112) which is adapted to emit an IR signal towards the reference device (200);
   wherein the receiving unit (120) comprises a first IR receiving element (122) and a second IR receiving element (124);
   wherein the first IR receiving element (122) is arranged for receiving the first IR signal and the second IR receiving element (124) is arranged for receiving the second IR signal, and wherein the first and second IR signals are reflections of the emitted IR signal from the reference device (200) towards the receiving unit (120);
   wherein the first IR transmitting element (112), the first IR receiving element (122), and the second IR receiving element (124) are arranged in line with each other along a common linear axis (161).

2. Air spring (1) according to claim 1,
   further comprising a control unit (150), which is configured for determining the distance (S) by calculating a ratio of the first and second IR signal.

3. Air spring (1) according to claim 1 or 2,
   wherein the first IR receiving element (122) and the second IR receiving element (124) are spaced apart from each other.

**4.** Air spring (1) according to one of the preceding claims,
wherein the first IR transmitting element (112) is inclined at an angle greater than 0° with respect to a perpendicular (201) on the reference device (200) such that the first IR transmitting element (112) is configured to emit an IR signal towards the reference device (200) at said angle.

**5.** Air spring (1) according to claim 4,
wherein the first IR transmitting element (112) is inclined towards the receiving unit (120).

**6.** Air spring (1) according to one of the preceding claims,
wherein the first IR receiving element (122) is inclined at an angle greater than 0° with respect to a perpendicular (201) on the reference device (200);
wherein the first IR receiving element (122) is inclined towards the transmitting unit (110).

**7.** Air spring (1) for a vehicle, comprising
a first plate (2);
a second plate (3) with a reference device (200), arranged opposite to the first plate (2); and
a distance measurement arrangement (100) arranged at the first plate (2);
wherein the distance measurement arrangement comprises:

a transmitting unit (110) for emitting infrared, IR, light towards the reference device (200);
a receiving unit (120) for receiving IR light reflected from the reference device (200);
wherein the receiving unit (120) is configured for receiving a first IR signal and a second IR signal;
wherein the distance measurement arrangement (100) is configured for determining a distance (S) between the distance measurement arrangement (100) and the reference device (200) based on the intensity of the first and second IR signals, which are reflected from the reference device (200);
wherein the reference device (200) is arranged at the second plate (3) opposite to the distance measurement arrangement (100) such that IR light emitted by the transmitting unit (110) is reflected towards the receiving unit (120);
wherein the transmitting unit (110) comprises a first IR transmitting element (112) which is adapted to emit the first IR signal and a second IR transmitting element (114) which is adapted to emit the second IR signal towards the reference device (200);
wherein the receiving unit (120) comprises a first IR receiving element (122);
wherein the first IR receiving element (122) is arranged for receiving the first IR signal and the second IR signal, which are reflected from the reference device (200) towards the receiving unit (120);
wherein the first IR transmitting element (112), the second IR transmitting element (114), and the first IR receiving element (122) are arranged in line with each other along a common linear axis (161).

**8.** Air spring (1) according to one of the preceding claims,
wherein the reference device (200) comprises a surface (205) pointing towards the distance measurement arrangement (100);
wherein the surface (205) is a flat surface having reflective and diffusing properties for IR light.

**9.** Air spring (1) according to one of the preceding claims,
wherein the first plate (2) and the second plate (3) are inclined at an angle greater than 0° with respect to each other.

**Patentansprüche**

**1.** Luftfeder (1) für ein Fahrzeug, aufweisend
eine erste Platte (2);
eine zweite Platte (3) mit einer Referenzvorrichtung (200), wobei die zweite Platte der ersten Platte (2) gegenüberliegend angeordnet ist; und
eine Abstandsmessanordnung (100), welche an der ersten Platte (2) angeordnet ist;
wobei die Abstandsmessanordnung aufweist:

eine Sendeeinheit (110) zum Emittieren von infrarotem, IR, Licht in Richtung der Referenzvorrichtung (200);
eine Empfangseinheit (120) zum Empfangen von IR-Licht, welches von der Referenzvorrichtung (200) reflektiert wurde;

EP 3 006 891 B1

wobei die Empfangseinheit (120) ausgeführt ist, ein erstes IR-Signal und ein zweites IR-Signal zu empfangen; wobei die Abstandsmessanordnung (100) ausgeführt ist, einen Abstand (S) zwischen der Abstandsmessanordnung (100) und der Referenzvorrichtung (200) basierend auf der Intensität des ersten IR-Signals und des zweiten IR-Signals, welche von der Referenzvorrichtung (200) reflektiert werden, zu bestimmen; wobei die Referenzvorrichtung (200) an der zweiten Platte (3) gegenüberliegend zu der Abstandsmessanordnung (100) so angeordnet ist, dass IR-Licht, welches von der Sendeeinheit (110) emittiert wurde, in Richtung der Empfangseinheit (120) reflektiert wird; wobei die Sendeeinheit (110) ein erstes IR-Sendeelement (112) aufweist, welches ausgeführt ist, ein IR-Signal in Richtung der Referenzvorrichtung (200) zu emittieren; wobei die Empfangseinheit (120) ein erstes IR-Empfangselement (122) und ein zweites IR-Empfangselement (124) aufweist; wobei das erste IR-Empfangselement (122) angeordnet ist, das erste IR-Signal zu empfangen und das zweite IR-Empfangselement (124) angeordnet ist, das zweite IR-Signal zu empfangen, und wobei das erste IR-Signal und das zweite IR-Signal Reflektionen des emittierten IR-Signals von der Referenzvorrichtung (200) in Richtung der Empfangseinheit (120) sind; wobei das erste IR-Sendeelement (112), das erste IR-Empfangselement (122) und das zweite IR-Empfangselement (124) entlang einer gemeinsamen linearen Achse (161) in Linie miteinander angeordnet sind.

2. Luftfeder (1) nach Anspruch 1,
weiterhin aufweisend eine Steuereinheit (150), welche ausgeführt ist, den Abstand (S) durch Ermitteln eines Verhältnisses des ersten und des zweiten IR-Signals zu ermitteln.

3. Luftfeder (1) nach Anspruch 1 oder 2,
wobei das erste IR-Empfangselement (122) und das zweite IR-Empfangselement (124) voneinander beabstandet sind.

4. Luftfeder (1) nach einem der voranstehenden Ansprüche,
wobei das erste IR-Sendeelement (112) in einem Winkel größer als 0° mit Bezug zu einer Senkrechten (201) auf der Referenzvorrichtung (200) geneigt ist, so dass das erste IR-Sendeelement (112) ausgeführt ist, ein IR-Signal in Richtung der Referenzvorrichtung (200) in dem besagten Winkel zu emittieren.

5. Luftfeder (1) nach Anspruch 4,
wobei das erste IR-Sendeelement (112) in Richtung der Empfangseinheit (120) geneigt ist.

6. Luftfeder (1) nach einem der voranstehenden Ansprüche,
wobei das erste IR-Empfangselement (122) in einem Winkel größer als 0° mit Bezug zu einer Senkrechten (201) auf der Referenzvorrichtung (200) geneigt ist; wobei das erste IR-Empfangselement (122) in Richtung der Sendeeinheit (110) geneigt ist.

7. Luftfeder (1) für ein Fahrzeug, aufweisend
eine erste Platte (2);
eine zweite Platte (3) mit einer Referenzvorrichtung (200), wobei die zweite Platte der ersten Platte (2) gegenüberliegend angeordnet ist; und
eine Abstandsmessanordnung (100), welche an der ersten Platte (2) angeordnet ist;
wobei die Abstandsmessanordnung aufweist:

eine Sendeeinheit (110) zum Emittieren von infrarotem, IR, Licht in Richtung der Referenzvorrichtung (200);
eine Empfangseinheit (120) zum Empfangen von IR-Licht, welches von der Referenzvorrichtung (200) reflektiert wurde;
wobei die Empfangseinheit (120) ausgeführt ist, ein erstes IR-Signal und ein zweites IR-Signal zu empfangen; wobei die Abstandsmessanordnung (100) ausgeführt ist, einen Abstand (S) zwischen der Abstandsmessanordnung (100) und der Referenzvorrichtung (200) basierend auf der Intensität des ersten IR-Signals und des zweiten IR-Signals, welche von der Referenzvorrichtung (200) reflektiert werden, zu bestimmen; wobei die Referenzvorrichtung (200) an der zweiten Platte (3) gegenüberliegend zu der Abstandsmessanordnung (100) so angeordnet ist, dass IR-Licht, welches von der Sendeeinheit (110) emittiert wurde, in Richtung der Empfangseinheit (120) reflektiert wird; wobei die Sendeeinheit (110) aufweist: ein erstes IR-Sendeelement (112), welches ausgeführt ist, das erste IR-Signal in Richtung der Referenzvorrichtung (200) zu emittieren, und ein zweites IR-Sendeelement (114), welches ausgeführt ist, das zweite IR-Signal in Richtung der Referenzvorrichtung (200) zu emittieren;

wobei die Empfangseinheit (120) ein erstes IR-Empfangselement (122) aufweist;

wobei das erste IR-Empfangselement (122) angeordnet ist, das erste IR-Signal und das zweite IR-Signal zu empfangen, wo bei das erste IR-Signal und das zweite IR-Signal von der Referenzvorrichtung (200) in Richtung der Empfangseinheit (120) reflektiert werden;

wobei das erste IR-Sendeelement (112), das zweite IR-Sendeelement (114) und das erste IR-Empfangselement (122) entlang einer gemeinsamen linearen Achse (161) in Linie miteinander angeordnet sind.

**8.** Luftfeder (1) nach einem der voranstehenden Ansprüche,

wobei die Referenzvorrichtung (200) eine Oberfläche (205) aufweist, welche in Richtung der Abstandsmessanordnung (100) weist;

wobei die Oberfläche (205) eine ebene Oberfläche ist, welche für IR-Licht reflektierende und streuende Eigenschaften hat.

**9.** Luftfeder (1) nach einem der voranstehenden Ansprüche,

wobei die erste Platte (2) und die zweite Platte (3) mit Bezug zueinander in einem Winkel größer als 0° geneigt sind.


**Revendications**

**1.** Ressort pneumatique (1) destiné à un véhicule, comprenant :

une première plaque (2) ;

une seconde plaque (3) pourvue d'un dispositif de référence (200), disposée en regard de la première plaque (2) ; et

un agencement de mesure de distance (100) disposé sur la première plaque (2) ;

dans lequel l'agencement de mesure de distance comprend :

une unité d'émission (110) destinée à émettre une lumière infrarouge, IR, vers le dispositif de référence (200) ;

une unité de réception (120) destinée à recevoir une lumière IR réfléchie par le dispositif de référence (200) ;

dans lequel l'unité de réception (120) est conçue pour recevoir un premier signal IR et un second signal IR ;

dans lequel l'agencement de mesure de distance (100) est conçu pour déterminer une distance (S) entre l'agencement de mesure de distance (100) et le dispositif de référence (200), sur la base de l'intensité des premier et second signaux IR qui sont réfléchis par le dispositif de référence (200) ;

dans lequel le dispositif de référence (200) est disposé sur la seconde plaque (3) en regard de l'agencement de mesure de distance (100), de manière que la lumière IR émise par l'unité d'émission (110) soit réfléchie vers l'unité de réception (120) ;

dans lequel l'unité d'émission (110) comprend un premier élément d'émission IR (112) qui est destiné à émettre un signal IR vers le dispositif de référence (200) ;

dans lequel l'unité de réception (120) comprend un premier élément de réception IR (122) et un second élément de réception IR (124) ;

dans lequel le premier élément de réception IR (122) est agencé pour recevoir le premier signal IR et le second élément de réception IR (124) est agencé pour recevoir le second signal IR, et dans lequel les premier et second signaux IR sont des réflexions du signal IR émis, depuis le dispositif de référence (200) vers l'unité de réception (120) ;

dans lequel le premier élément d'émission IR (112), le premier élément de réception IR (122) et le second élément de réception IR (124) sont agencés dans l'alignement les uns des autres, le long d'un axe linéaire commun (161).

**2.** Ressort pneumatique (1) selon la revendication 1,

comprenant en outre une unité de commande (150) qui est conçue pour déterminer la distance (S) en calculant un rapport entre le premier et le second signal IR.

**3.** Ressort pneumatique (1) selon la revendication 1 ou 2,

dans lequel le premier élément de réception IR (122) et le second élément de réception IR (124) sont espacés l'un de l'autre.

**4.** Ressort pneumatique (1) selon l'une des revendications précédentes,
dans lequel le premier élément d'émission IR (112) est incliné selon un angle supérieur à 0° par rapport à une perpendiculaire (201) au dispositif de référence (200), de sorte que le premier élément d'émission IR (112) est conçu pour émettre un signal IR vers le dispositif de référence (200) selon ledit angle.

**5.** Ressort pneumatique (1) selon la revendication 4,
dans lequel le premier élément d'émission IR (112) est incliné vers l'unité de réception (120).

**6.** Ressort pneumatique (1) selon l'une des revendications précédentes,
dans lequel le premier élément de réception IR (122) est incliné selon un angle supérieur à 0° par rapport à une perpendiculaire (201) au dispositif de référence (200) ; dans lequel le premier élément de réception IR (122) est incliné vers l'unité de réception (110).

**7.** Ressort pneumatique (1) destiné à un véhicule, comprenant :

une première plaque (2) ;
une seconde plaque (3) pourvue d'un dispositif de référence (200), disposée en regard de la première plaque (2) ; et
un agencement de mesure de distance (100) disposé sur la première plaque (2) ;
dans lequel l'agencement de mesure de distance comprend :

une unité d'émission (110) destinée à émettre une lumière infrarouge, IR, vers le dispositif de référence (200) ;
une unité de réception (120) destinée à recevoir une lumière IR réfléchie par le dispositif de référence (200) ;
dans lequel l'unité de réception (120) est conçue pour recevoir un premier signal IR et un second signal IR ;
dans lequel l'agencement de mesure de distance (100) est conçu pour déterminer une distance (S) entre l'agencement de mesure de distance (100) et le dispositif de référence (200), sur la base de l'intensité des premier et second signaux IR qui sont réfléchis par le dispositif de référence (200) ;
dans lequel le dispositif de référence (200) est disposé sur la seconde plaque (3) en regard de l'agencement de mesure de distance (100), de manière que la lumière IR émise par l'unité d'émission (110) soit réfléchie vers l'unité de réception (120) ;
dans lequel l'unité d'émission (110) comprend un premier élément d'émission IR (112) qui est destiné à émettre le premier signal IR, et un élément d'émission IR (114) qui est destiné à émettre le second signal IR vers le dispositif de référence (200) ;
dans lequel l'unité de réception (120) comprend un premier élément de réception IR (122) ;
dans lequel le premier élément de réception IR (122) est agencé pour recevoir le premier signal IR et le second signal IR qui sont réfléchis par le dispositif de référence (200) vers l'unité de réception (120) ;
dans lequel le premier élément d'émission IR (112), le second élément d'émission IR (114) et le premier élément de réception IR (122) sont agencés dans l'alignement les uns des autres, le long d'un axe linéaire commun (161).

**8.** Ressort pneumatique (1) selon l'une des revendications précédentes,
dans lequel le dispositif de référence (200) comprend une surface (205) orientée vers l'agencement de mesure de distance (100) ;
dans lequel la surface (205) est une surface plane possédant des propriétés de réflexion et de diffusion de la lumière IR.

**9.** Ressort pneumatique (1) selon l'une des revendications précédentes,
dans lequel la première plaque (2) et la seconde plaque (3) sont inclinées, l'une par rapport à l'autre, selon un angle supérieur à 0°.

Fig. 1

Fig. 2

Fig. 3

Fig. 4

Fig. 5

Fig. 6

*Fig. 7*

*Fig. 8*

*Fig. 9*

*Fig. 10*

$Rx_1 < Rx_2$

$100$

$Rx_2$

Max Measurement $S_{Max}$

$\alpha$

$Rx_1 > Rx_2$

$100$

Min Measurement $S_{MIN}$

$Rx_1$

$\alpha$

$118$

$201$

$200$

Fig. 11

Fig. 12

| | | Measured Values in Volt | | | |
|---|---|---|---|---|---|
| | Height (Distance) | Rx1 | Rx2 | | Signal Ratio |
| $S_{MIN}$ | 50 | 4.414 | 2.414 | | 1.829 |
| | 100 | 2.517 | 1.793 | | 1.404 |
| | 150 | 1.379 | 1.379 | | 1.000 |
| | 200 | 0.759 | 1.310 | | 0.579 |
| $S_{MAX}$ | 250 | 0.345 | 2.069 | | 0.167 |

## Fig. 13

Absolute Signal Amplitude from Rx1 and Rx2
of the IR Height (Distance) Measurement System

## Fig. 14

Fig. 15

Fig. 16

Fig. 17

Fig. 18

Fig. 19

*Fig.20*

*Fig.21*

Fig.22

Fig.23

**EP 3 006 891 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0419082 A2
- JP S5618710 A
- US 5229829 A